# EUROPÄISCHE PATENTSCHRIFT

(11) **EP 0 904 310 B1**
(45) Veröffentlichungstag und Bekanntmachung des Hinweises auf die Patenterteilung: **19.09.2001**
(21) Anmeldenummer: 97927138.4
(22) Anmeldetag: 05.06.1997
(51) Int. Cl.: C08G 18/40, C08G 18/42, C09D 175/04

(54) **BINDEMITTEL- UND ÜBERZUGSMITTELZUSAMMENSETZUNG UND DEREN VERWENDUNG BEI DER MEHRSCHICHTLACKIERUNG**
BINDER AND COATING AGENT COMPOSITION AND ITS USE IN MULTICOAT PAINTING
COMPOSITION DE LIANTS ET D'AGENTS DE REVETEMENT ET SON UTILISATION DANS LA MISE EN PEINTURE MULTICOUCHE

(30) Priorität: 12.06.1996 DE 19623371
(43) Veröffentlichungstag der Anmeldung: 31.03.1999
(73) Patentinhaber: E.I. DU PONT DE NEMOURS AND COMPANY, Wilmington Delaware 19898 (US)
(72) Erfinder: FLOSBACH, Carmen, D-42287 Wuppertal (DE); HERRMANN, Friedrich, D-42117 Wuppertal (DE); SCHUBERT, Walter, D-42349 Wuppertal (DE); SCHILD, Dirk, D-42349 Wuppertal (DE)
(74) Vertreter: Hrabal, Ulrich, Dr.
(86) Internationale Anmeldenummer: EP9702917
(87) Internationale Veröffentlichungsnummer: WO9747674

(56) Entgegenhaltungen:
- EP-A- 0 242 714
- EP-A- 0 314 447
- DE-A- 4 024 204
- DE-A- 4 135 571
- DE-A- 4 421 823

## Beschreibung

Die Erfindung betrifft lösemittelhaltige oder wäßrige Bindemittel und hitzehärtbare lösemittelhaltige oder wäßrige Überzugsmittel und deren Verwendung für die Herstellung von Lackierungen, insbesondere von Mehrschichtlackierungen, beispielsweise als Basislack und bevorzugt als Klar- oder Decklack.
Überzugsmittel, in denen hydroylgruppenhaltige Harze mit Polyisocyanaten vernetzt werden, sind bekannt. So beschreibt die EP-A-0 541 604 Überzugsmittel auf der Basis hydroxylgruppenhaltiger Polykondensations- und Polyadditionsprodukte, die mit Polyisocyanaten vernetzt werden, wobei das hydroxylgruppenhaltige Bindemittel sich zusammensetzt aus mindestens einem Polyester und/oder einem Alkydharz und mindestens einem Polyacrylatharz, wobei das Polyacrylatharz zumindest teilweise in Gegenwart des anteilsmäßig enthaltenen Polyesters hergestellt wird. Als Katalysatoren dienen hier übliche metallorganische Verbindungen wie Dibutylzinnlaurat. Derartige Stoffe sind toxikologisch nicht unbedenklich und rufen zudem oft eine Vergilbung hervor. Die EP-A-0 036 975 beschreibt einen Zweikomponentenlack, der sich zusammensetzt aus einem aromatenarmen Polyesterpolyol und gegebenenfalls einem hydroxyfunktionellen Polyacrylatharz, die mit Polyisocyanaten vernetzt werden. Als Katalysator dient hier Zinkoctoat, das in Verbindung mit UV-Absorbern oft zu stark vergilbten Lacken führt. Die EP-A-0 206 072 beschreibt Polyacrylatcopolymere, die in Gegenwart von Polyesterpolyolen synthetisiert werden. Diese Bindemittel können mit Polyisocyanaten oder Melaminharzen vernetzt werden. Als Katalysatoren werden Säuren wie z.B. para-Toluolsulfonsäure beschrieben. Auch die Verwendung derartiger Säuren führt in Klarlacken oft zu starker Vergilbung.

Aufgabe der Erfindung ist die Bereitstellung eines Überzugsmittels, das insbesondere geeignet ist für festkörperreiche, hochchemikalienfeste und vergilbungsfreie Beschichtungen mit sehr gutem Decklackstand, sehr geringer Ablaufneigung und sehr hoher Kochsicherheit, wobei die zuvor beschriebenen Nachteile vermieden werden.

Es hat sich gezeigt, daß diese Aufgabe gelöst werden kann durch eine Bindemittelzusammensetzung bzw. durch Überzugsmittel, die im Gegensatz zu den bekannten Überzugsmitteln als Katalysatoren stark saure Harze verwenden.
Gegenstand der Erfindung bildet daher eine Bindemittelzusammensetzung, welche enthält:
A) 20 bis 77 Gew.-% eines oder mehrerer Bindemittel auf der Basis einer oder mehrerer oligomerer oder polymerer Polyolverbindungen mit einer Hydroxylzahl von 80 bis 300 mg KOH/g, bevorzugt 120 bis 200 mg KOH/g, einer Säurezahl von 0 bis 30 mg KOH/g, bevorzugt 0 bis 15 mg KOH/g, einem Zahlenmittel des Molekulargewichts (Mn) von 500 bis 10000, bevorzugt 1000 bis 5000, und einer Glastemperatur von -20 bis +70°C, bevorzugt 0 bis 50°C;
B) 77 bis 20 Gew.-% eines oder mehrerer Vernetzer auf der Basis aliphatischer und/oder cycloaliphatischer Polyisocyanate;
C) 3 bis 20 Gew.-% eines oder mehrerer carboxylgruppenhaltige Oligo-oder Polyester als Katalysatorharze mit einer Säurezahl von 210 bis 300 mg KOH/g, bevorzugt 220 bis 270 mg KOH/g, und einem Zahlenmittel des Molekulargewichts (Mn) von 420 bis 3000, bevorzugt 700 bis 2000;

wobei die Summe der Komponenten A) bis C) jeweils 100 Gew.-% ergibt;
sowie ein oder mehrere organische Lösemittel und/oder Wasser.

Einen weiteren Gegenstand der Erfindung bilden wäßrige und nicht-wäßrige Überzugsmittel, die die erfindungsgemäße Bindemittelzusammensetzung sowie lackübliche Additive enthalten, wobei lackübliche Additive auch Pigmente und/oder Füllstoffe sein können.

Die erfindungsgemäßen Bindemittelzusammensetzungen und Überzugsmittel enthalten als Komponente A) eine oder mehrere Polyolverbindungen als Bindemittel die beispielsweise und bevorzugt hydroxyfunktionelle (Meth)acryl-Copolymere, Polyester und/oder Polyester-modifizierte (Meth)acryl-Copolymere sein können, wobei jedoch auch andere Polyole, wie z.B. hydroxyfunktionelle Polyurethane und Polyether geeignet sind.

Die Herstellung der (Meth)acrylcopolymerisate kann durch Polymerisation nach üblichen Verfahren, wie z.B. der Substanz-, Lösungs- oder Perlpolymerisation durchgeführt werden. Die verschiedenen Polymerisationsverfahren sind dem Fachmann gut bekannt und beispielsweise beschrieben in: Houben-Weyl, Methoden der organischen Chemie, 4. Aufl., Band 14/1, Seiten 24 bis 255 (1961). Das Lösungspolymerisationsverfahren wird für die Herstellung der im erfindungsgemäßen Überzugsmittel eingesetzten (Meth)acryl-Copolymerisate bevorzugt. Bei diesem Verfahren wird das Lösemittel im Reaktionsgefäß vorgelegt, auf Siedetemperatur geheizt und die Monomeren werden gegebenenfalls im Gemisch mit Radikalinitiatoren kontinuierlich in einer bestimmten Zeit zudosiert. Die Polymerisationstemperaturen liegen beispielsweise zwischen 60°C und 160°C, bevorzugt zwischen 120°C und 150°C. Bei der Polymerisation können die Initiatoren und Monomeren jedoch auch getrennt bzw. zeitlich versetzt zudosiert werden.

Die verwendeten (Meth)acrylmonomeren können nicht-funktionalisiert, hydroxyfunktionalisiert oder carboxyfunktionalisiert sein. Desweiteren können auch weitere ethylenisch ungesättigte Monomere eingesetzt werden. Der Ausdruck "(meth)acryl" steht synonym für "acryl und/oder methacryl".

Beispiele für nicht-funktionalisierte (Meth)acrylate sind z.B. langkettige, verzweigte oder unverzweigte ungesättigte Monomere, wie Alkyl(meth)acrylate mit C₈-C₁₈-Ketten im Alkylteil, wie z.B. 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat-1214, Isobornyl(meth)acrylat, 4-tert.-Butylcyclohexylmethacrylat. Weitere Beispiele sind kurz- oder mittelkettige, verzweigte oder unverzweigte ungesättigte Monomere, wie Alkyl(meth)acrylate mit C₁-C₇-Ketten im Alkylteil, z.B. Methyl(meth)acrylat, Ethyl(meth)acrylat, Propyl(meth)acrylat, Butyl(meth)acrylat, Isopropyl(meth)acrylat, Isobutyl(meth)acrylat, Tertiärbutyl(meth)acrylat, Pentyl(meth)acrylat, Hexyl(meth)acrylat, Cyclohexyl(meth)acrylat.

Eine weitere geeignete nicht-funktionalisierte polymerisierbare Komponente ist eine monovinylaromatische Verbindung. Vorzugsweise enthält sie 8 bis 10 Kohlenstoffatome je Molekül. Beispiele für geeignete Verbindungen sind Styrol, Vinyltoluole, α-Methylstyrol, Chlorstyrol, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Auch möglich ist die Verwendung des Vinylesters der Versaticsäure (Handelsbezeichnung VEOVA 10 der Shell AG).

Beispiele für weitere geeignete nicht-funktionalisierte ethylenisch ungesättigte Monomere sind die Alkylester der Malein-, Fumar-, Tetrahydrophthal-, Croton-, Isocroton-, Vinylessig- und Itaconsäure, wie z.B. die entsprechenden Methyl-, Ethyl-, Propyl-, Butyl-, Isopropyl-, Isobutyl-, Pentyl-, Amyl-, Isoamyl-, Hexyl-, Cyclohexyl-, 2-Ethylhexyl-, Octyl-, 3,5,5,-Trimethylhexyl-, Decyl-, Dodecyl-, Hexadecyl-, Octadecyl- und Octadecenylester.

Die verwendeten (Meth)acrylmonomere können primäre oder sekundäre Hydroxyfunktionen tragen. Beispiele für Monomere mit primären Hydroxyfunktionen sind Hydroxyalkylester, α,β-ungesättigter Carbonsäuren, wie z.B. Acrylsäure und/oder Methacrylsäure mit einer primären OH-Gruppe und einem C₂-C₃-Hydroxyalkylrest wie Hydroxyethyl(meth)acrylat, sowie Hydroxyalkylester α,β-ungesättiger Carbonsäuren wie der Acrylsäure und/oder Methacrylsäure mit einer primären OH-Gruppe und einem C₄-C₁₈-Hydrxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)acrylat mit Caprolacton.

Beispiele für Monomere mit sekundären OH-Funktionen sind Hydroxypropyl(meth)acrylat, Addukte aus Glycidyl(meth)acrylat und gesättigten kurzkettigen Säuren mit C₁-C₃-Alkylresten, z.B. Essigsäure oder Propionsäure, Umsetzungsprodukte aus Glycidyl(meth)acrylat mit gesättigten verzweigten oder unverzweigten Fettsäuren mit C₄-C₂₀-Alkylresten, z.B. Butansäure, Capronsäure, Laurinsäure, Palmitinsäure, Stearinsäure, Arachidonsäure sowie Addukte aus Glycidylestern stark verzweigter Monocarbonsäuren (Glycidylester der Versaticsäure ist unter dem Handelsnamen Cardura E erhältlich) mit ungesättigten COOH-funktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid. Die Umsetzung der Acrylsäure oder Methacrylsäure mit dem Glycidylester einer Carbonsäure mit einem tertiären α-Kohlenstoff kann vor, während oder nach der Polymerisationsreaktion erfolgen.

Beispiele für geeignete carboxylgruppenhaltige Monomere sind ungesättigte Carbonsäuren, wie z.B. Acryl-, Methacryl-, Itacon-, Croton-, Isocroton-, Aconit-, Malein- und Fumarsäure, Halbester der Malein- und Fumarsäure sowie β-Carboxyethylacrylat und Addukte von Hydroxyalkylestern der Acrylsäure und/oder (Meth)acrylsäure mit Carbonäureanhydriden, wie z.B. der Phthalsäure-mono-2-methacryloyloxyethylester, sowie Halbester von Maleinsäureanhydrid durch Anlagerung von gesättigten aliphatischen Alkoholen wie z.B. Ethanol, Propanol, Butanol und/oder Isobutanol.

Ebenfalls möglich ist die Verwendung einer geringen Menge von (Meth)acrylmonomeren mit endständigen tert.-Aminogruppen. Beispiele für solche Monomere sind tert.-Aminomethyl(meth)acrylat oder tert.-Aminopropyl(meth)acrylat.

Weiterhin können auch kleine Anteile Monomere mit mindestens zwei polymerisierbaren, olefinisch ungesättigten Doppelbindungen eingesetzt werden. Bevorzugt liegt der Anteil dieser Monomeren unter 5 Gew.-%, bezogen auf das Gesamtgewicht der Monomeren. Beispiele für derartige Verbindungen sind Hexandioldi(meth)acrylat, Ethylenglykoldi(meth)acrylat, Butandioldi(meth)acrylat, Hexamethylenbis(meth)acrylat, Trimethylolpropantri(meth)acrylat und ähnliche Verbindungen.

Ebenfalls einsetzbar sind Siloxan-modifizierte Monomere wie z.B. Trimethylsiloxyethyl(meth)acrylat und Trimethylsiloxypropyl(meth)acrylat.

Beispiele für Radikalinitiatoren, die zur Herstellung der (Meth)acrylcopolymerisate verwendet werden können, sind Dialkylperoxide, wie Di-tert.-Butylperoxid, Di-Cumylperoxid; Diacylperoxid, wie Di-benzoylperoxid, Dilauroylperoxid; Hydroperoxide, wie Cumolhydroperoxid, tert.-Butylhydroperoxid; Perester, wie tert.-Butyl-perbenzoat, tert.-Butylperpivalat, tert.-Butyl-per-3,5,5-trimethylhexanoat, tert.-Butyl-per-2-ethyl-hexanoat; Peroxiddicarbonate, wie Di-2-ethylhexylperoxydicarbonat, Dicyclohexylperoxydicarbonat; Perketale, wie 1,1-bis-(tert.-Butylperoxy)-3,5,5-trimethyl-cyclohexan, 1,1-Bis-(tert.-Butylperoxy)cyclohexan; Ketonperoxide, wie Cyclohexanonperoxid, Methylisobutylketonperoxid und Azoverbindungen, wie 2,2'Azo-bis-(2,4-dimethyl-valeronitril), 2,2'-Azo-bis-(2-methylbutyronitril), 1,11-Azo-bis-cyclohexancarbonitril, Azo-bis-isobutyronitril, C-C-spaltende Initiatoren wie z.B. Benzpinakol-Derivate.

Die Polymerisationsinitiatoren werden im allgemeinen beispielsweise in einer Menge von 0,1 bis 4 Gew.-%, bezogen auf die Monomeren-Einwaage, zugesetzt.

Zur Regelung des Molekulargewichtes können insbesondere bei der bevorzugten Lösungspolymerisation Kettenüberträger mitverwendet werden. Beispiele hierfür sind Mercaptane, Thioglykolsäureester, Chlorkohlenwasserstoffe, Cumol und dimeres α-Methylstyrol.

Die beschriebenen (Meth)acrylcopolymeren sollen eine Hydroxylzahl von 80 bis 300 mg KOH/g, bevorzugt 120 bis 200 mg KOH/g, eine Säurezahl von 0 bis 30 mg KOH/g, bevorzugt 0 bis 15 mg KOH/g, ein Zahlenmittel des Molakulargewichts von 500 bis 10000, bevorzugt 1000 bis 5000, und eine Glastemperatur von -20 bis +70°C, bevorzugt 0 bis 50°C besitzen. Die Mengenanteile der verschiedenen Monomeren und Zusätze werden bei der Herstellung in dem Fachmann geläufiger Weise so gewählt, daß sich die gewünschten Spezifikationen für Molekulargewicht, OH- und Säurezahl, sowie Glastemperatur ergeben.

Als Bindemittelkomponente A) können auch Polyester eingesetzt werden.

Die Herstellung der in den erfindungsgemäßen Überzugsmitteln enthaltenen Polyester erfolgt nach den üblichen, dem Fachmann geläufigen Verfahren der Polykondensation von Mono-, Di- und/oder Tricarbonsäuren bzw. deren Anhydriden und Mono-, Di-, und/oder Tri-bzw. Polyolen, beispielsweise in Gegenwart von üblichen Veresterungskatalysatoren und bei erhöhten Temperaturen von z.B. 180-250°C, beispielsweise in der Schmelze. Gegebenenfalls können auch Schleppmittel wie z.B. Xylol verwendet werden.

Geeignete Monocarbonsäuren zur Herstellung der Polyester sind beispielsweise aromatische Carbonsäuren, wie Benzoesäure, tert.-Butylbenzoesäure und Hexahydrobenzoesäure, gesättigte Fettsäuren, wie z.B. 2-Ethylhexansäure, Isononansäure, Kokosölfettsäure, hydrierte technische Fettsäuren bzw. Fettsäuregemische, Dekansäure, Dodekansäure, Tetradekansäure, Stearinsäure, Palmitinsäure, Docosansäure, ungesättigte Fettsäuren, wie z.B. Sojafettsäure, Sorbinsäure, Erdnußfettsäure, Konjuenfettsäuren, Tallölfettsäure, Safflorölfettsäure sowie Gemische dieser oder anderer Monocarbonsäuren.

Geeignete höherfunktionelle Carbonsäuren bzw. Anhydride sind beispielsweise Phthalsäure(anhydrid), Isophthalsäure, Terephthalsäure, Tetrahydrophthalsäure(anhydrid), Hexahydrophthalsäure(anhydrid), 1,3-und 1,4-Cyclohexandicabonsäure, Maleinsäure(anhydrid), Bernsteinsäure(anhydrid), Fumarsäure, Adipinsäure, Sebacinsäure, Azelainsäure, Dimerfettsäuren, Trimerfettsäure, Trimellithsäure(anhydrid), Pyromellithsäure(anhydrid) und Gemische dieser oder anderer Säuren.

Geeignete einwertige Alkohole sind beispielsweise aliphatische und cycloaliphatische Alkohole wie n-Hexanol, Cyclohexanol, Decanol, Dodecanol, Tetradecanol, Octanol, Octadecanol, natürliche und synthetische Fettalkohole wie z.B. Laurylalkohol, Ocenol 110/130 (Fa. Henkel) und Gemische dieser und anderer Alkohole. Die monohydroxyfunktionellen Alkohole können auch mit Carboxyfunktionen ausgestattet sein. Geeignet sind hier beispielsweise Dimethylolpropionsäure, Milchsäure, Apfelsäure, Weinsäure, epsilon-Hydroxycapronsäure, Rizinusölfettsäure oder Derivate, wie epsilon-Caprolacton.

Geeignete mehrwertige Alkohole sind beispielsweise aliphatische und cycloaliphatische Diole und Polyole, wie Ethylenglykol, 1,2- und 1,3-Propylenglykol, 1,3-, 1,4-, 2,3-Butandiol, 1,6-Hexandiol, 2,5-Hexandiol, Trimethylhexandiol, Diethylenglykol, Triethylenglykol, hydrierte Bisphenole, 1,4-Cyclohexandiol, 1,4-Cyclohexandimethanol, Neopentylglykol, Tricyclodecandiol, 1,4-Butandiol, Trimethylolpropan, Glycerin, Pentaerythrit, Trimethylpentandiol, Dipentaerythrit und Gemische dieser oder anderer mehrwertiger Alkohole.

Ebenfalls geeignet sind Monoamino-hydroxy- und/oder Monoaminocarboxyverbindungen. Beispiele hierfür sind Aminoethanol, 2-Aminopropanol, Diethanolamin, Aminoessigsäure oder 6-Aminohexansäure.

Geeignete organische Lösemittel zur Herstellung des Polyesterharzes sind z.B. N-Methylpyrrolidon, Ketone wie Methylethylketon, Methylisobutylketon, Aceton, Aromaten wie Xylol, Ester wie Butylacetat bzw. Gemische dieser oder anderer Lösemittel.

Als Bindemittelkomponente A) können auch Polyester-modifizierte (Meth)acryl-Copolymere eingesetzt werden. Die Herstellung dieser Bindemittel erfolgt durch radikalische Copolymerisation in Gegenwart eines Polyesterharzes. Als Polyester können beispielsweise die vorstehend als Komponente A) beschriebenen oder ähnliche eingesetzt werden. Bei den Monomeren kann es sich um die gleichen handeln, wie sie vorstehend zur Herstellung der (Meth)acrylcopolymerisate für die Komponente A) beschrieben wurden. Die Monomermenge wird dabei so abgestimmt, daß die gewünschten Spezifikationen bezüglich Molmasse, OH-Gruppen-Verhältnis, OH-Zahl und Säurezahl erzielt werden.

Die Herstellung erfolgt beispielsweise als radikalische Lösungspolymerisation in Anwesenheit eines Radikalinitiators, wie sie bereits bei der Herstellung der erfindungsgemäß einsetzbaren (Meth)acryl-Copolymeren beschrieben wurde. Die Polymerisationsinitiatoren werden im allgemeinen beispielsweise in einer Menge von 0,1 bis 4 Gew.-%, bezogen auf die Monomeren-Einwaage zugesetzt. Bei der Polymerisation können die Monomeren jedoch auch getrennt bzw. zeitlich versetzt zudosiert werden. Beispielsweise geht man so vor, daß die gesamte oder eine Teilmenge des Polyesterharzes gegebenenfalls in einem organischen Lösemittel gelöst vorgelegt wird und die radikalische Polymerisation dann im Schoße dieses Polyesterharzes bzw. der Polyesterharzlösung durchgeführt wird. Als Lösemittel können solche eingesetzt werden, die auch bei der Polyesterharzsynthese benutzt werden, es können aber auch andere geeignete Lösemittel eingesetzt werden. Als organische Lösemittel eignen sich lackübliche Lösemittel, wie sie später auch in dem erfindungsgemäßen Überzugsmittel eingesetzt werden können, beispielsweise: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe können ebenfalls im Verschnitt mit den oben genannten Lösemitteln eingesetzt werden. Zur Regelung des Molekulargewichts können auch hier Kettenüberträger mitverwendet werden.

Als Komponente B) der erfindungsgemäßen Überzugsmittel werden Polyisocyanate eingesetzt. Beispiele für erfindungsgemäß einsetzbare Polyisocyanate sind cycloaliphatische und aliphatische Polyisocyanate wie 1,2-Propylendiisocyanat, 2,3-Butylendiisocyanat, Tetramethylendiisocyanat, 1,6-Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat IPDI) oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetztem IPDI mit einfachen mehrwertigen Alkoholen des Molekulargewichtsbereiches 62 bis 300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel des Molekulargewichts (Mn) von 300 bis 10000, vorzugsweise 400 bis 6000, zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Prepolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen. Die Art und Mengenverhältnisse der bei der Herstellung der NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel des Molekulargewichts (Mn) von 500 bis 10000, vorzugsweise von 800 bis 4000 aufweisen.

Ebenfalls möglich ist die Verwendung von Copolymeren des vinylisch ungesättigten Monoisocyanates Dimethyl-m-isopropylenbenzylisocyanat, wie sie unter anderem in der DE-A-41 37 615 beschrieben sind.

Die Isocyanatgruppierungen der eingesetzten Polyisocyanate sind gegebenenfalls teilweise oder vollständig verkappt. Es können übliche Verkappungsmittel verwendet werden, z.B. 1,2-Propandiol, Malonsäuredimethylester, Malonsäurediethylester, Acetessigsäureethylester und/oder Butanonoxim sowie weitere, dem Fachmann geläufige Verkappungsmittel. Als weitere Verkappungsmittel kommen beispielsweise Verbindungen in Frage, die nur eine einzige Amin,- Amid, Imid-, Lactam-, Thio- oder Hydroxylgruppe enthalten. Beispiele sind aliphatische oder cycloaliphatische Alkohole, wie n-Butanol, Isopropanol, tert.-Butanol, Furfurol, 2-Ethylhexanol, Cyclohexanol, Phenole, Kresol, tert.-Butylphenole, Dialkylaminoalkohole wie Dimethylaminoethanol, Oxime wie Methylethyketoxim, Acetonoxim, Cyclohexanonoxim, Acetophenonoxim, Lactame wie epsilon-Caprolactam oder Pyrrolidon-2, Imide wie Phthalimid oder N-Hydroxymaleinimid, Hydroxyalkylester, Hydroxamsäuren und deren Ester, N-Alkylamide wie Methylacetamid, Imidazole wie 2-Methylimidazol, Pyrazole wie 2,3-Dimethylpyrazol. Es können aber auch Gemische dieser Verkappungsmittel eingesetzt werden.

Der Anteil an Polyisocyanatvernetzer wird bevorzugt so gewählt, daß auf eine Hydroxylgruppe der Bindemittelkomponente 0,5 bis 2,0 Isocyanatgruppen entfallen.

Als Komponente C) werden stark saure carboxylgruppenhaltige Oligo-und/oder Polyester eingesetzt. Die Synthese dieser Komponente C) entspricht im wesentlichen der Synthese der Polyesterkomponente A). Dies schließt die als Beispiele angegebenen verwendbaren Ausgangsstoffe wie Alkohole und Säuren ein. Um die sehr hohen Säurezahlen zu erreichen, ist es oft notwendig, nach der Polykondensation durch einen zusätzlichen Reaktionsschritt Säuregruppen einzubauen. Dies geschieht beispielsweise, indem Hydroxyfunktionen der Polyester mit Carbonsäureanhydriden wie z.B. Hexahydrophthalsäureanhydrid durch eine Halbesterbildung umgesetzt werden. Beispiele für die Addition an die hydroxylfunktionellen Polyester bzw. Oligoester geeignete Carbonsäureanhydride sind die Anhydride von aliphatischen, cycloaliphatischen und weniger bevorzugt aromatischen gesättigten und/oder ungesättigten Di- und Polycarbonsäuren, wie z.B. Anhydride der Phthalsäure, Tetrahydrophthalsäure, Hexahydrophthalsäure, Bernsteinsäure, Maleinsäure, Itaconsäure, Glutarsäure, Trimellithsäure und Pyromellithsäure sowie deren halogenierten oder alkylierten Derivate. Bevorzugt eingesetzt werden Anhydride der Phthalsäure, Tetrahydrophthalsäure, Hexahydrophthalsäure sowie 5-Methylhexahydrophthalsäureanhydrid. Um oligomere und hochsäurefunktionelle Komponenten C) zu erhalten, können auch Di-, Tri- und Polyole allein mit Anhydriden umgesetzt werden. Besonders bevorzugt sind hier Trimethylolpropan, Di-Trimethylolpropan, Pentaerythrit und Di-Pentaerythrit.

Die Hydroxy- und/oder Carboxyfunktionen der Komponenten A) und C) können mit einem Lacton "kettenverlängert" werden. Die Lactone (cyclische Ester) lagern sich an Hydroxyl- und/oder Carboxylgruppen an, wobei der Ring geöffnet wird und eine neue endständige Hydroxyl- oder Carboxylgruppe entsteht. Ein Beispiel für ein besonders bevorzugtes Lacton ist das epsilon-Caprolacton. Beispiele für andere Lactone sind gamma-Butyrolacton und Lactone, wie beta-Priolacton, delta-Valerolacton, delta-Butyrolacton, zeta-Enantholacton, eta-Caprylolacton. Derartige Lactone können substituiert sein: Beispiele hierfür sind 6-Methyl-epsilon-caprolacton, 3-Methyl-epsilon-caprolacton, 5-Methyl-epsilon-caprolacton, 5-Phenol-epsilon-caprolacton, 4-methyl-delta-valerolacton, 3,5-Dimethyl-epsilon-caprolacton, und Mischungen davon. Die Umsetzung mit dem Lacton kann beispielsweise unmittelbar im Anschluß an die Harzsynthese, d.h. an die Synthese des Poly(meth)acrylpolymerisats und/oder des Polyesters erfolgen. Die Reaktion erfolgt beispielsweise bei erhöhter Temperatur, beispielsweise bei Temperaturen bis zu 100°C. Die Reaktion kann beispielsweise unter Rühren beispielsweise bis zu 10 Stunden durchgeführt werden.

Die erfindungsgemäßen Bindemittel und Überzugsmittel können in einer wasserverdünnbaren Form vorliegen. Dies kann beispielsweise durch partielle oder vollständige Neutralisation der sauren Gruppen der Komponenen A) und/oder C) mit Basen und/oder durch Zusatz von Emulgatoren erfolgen. Sofern eine wäßrige Emulsion erstellt werden soll, wird das bei der Herstellung der Komponenten A) und C) verwendete Lösemittel weitgehend entfernt. Dies kann beispielsweise destillativ, gegebenenfalls unter Vakuum erfolgen. Das erhaltene Harzkonzentrat, das aus den Komponenten A) und C), das einen hohen Festkörpergehalt von beispielsweise 90 Gew.-% hat, kann dann über die sauren Gruppierungen der Komponente C) mit einer üblichen Base, z.B. Ammoniak oder einem organischen Amin, z.B. Triethylamin, neutralisiert werden. Das neutralisierte Harzkonzentrat der Komponente C) fungiert dann als Emulgatorharz. Das erhaltene neutralisierte Harzkonzentrat kann in Wasser emulgiert werden. Dies kann beispielsweise unter starkem Rühren und erforderlichenfalls unter Erwärmen, beispielsweise auf Temperaturen von 30 bis 80°C, z.B. 50°C, erfolgen.

Ebenfalls kann das Harzkonzentrat mit Hilfe eines üblichen, ionischen oder nicht-ionischen Emulgatoren emulgiert werden. Dies geschieht z.B. durch Homogenisieren des Harzkonzentrats und des nicht-ionischen Emulgators, gegebenenfalls unter Erwärmen, beispielsweise auf Temperaturen von 30 bis 80°C, z.B. 60°C. Ein derartiges Gemisch kann in einer üblichen Homogenisierungseinrichtung kontinuierlich oder diskontinuierlich emulgiert werden. Beispiele hierfür sind Rotor/Stator-Homogenisatoren, die mit Drehzahlen von beispielsweise 8000 bis 10000 Umdrehungen pro Minute arbeiten. Die Emulgatoren werden beispielsweise in Mengen von 3 bis 30 Gew.-%, bezogen auf das Harzkonzentrat, eingesetzt.

Die erfindungsgemäßen Bindemittelzusammensetzungen können in üblicher Weise zu wäßrigen Überzugsmitteln formuliert werden. Dies erfolgt im allgemeinen durch Zusatz von Lösemitteln oder Wasser.

Geeignete organische Lösemittel für die Herstellung von Überzugsmitteln, beispielsweise Lacken, sind solche, wie sie auch bei der Herstellung der Einzelkomponenten verwendet werden können. Beispiele für derartige Lösemittel sind organische Lösemittel, sind organische Lösemittel, wie aliphatische und aromatische Kohlenwasserstoffe, beispielsweise Toluol, Xylol, Gemische aliphatischer und/oder aromatischer Kohlenwasserstoffe, Ester, Ether.

Es sind dies lackübliche Lösemittel.

Zur Herstellung der wäßrigen oder nicht wäßrigen Überzugsmittel können übliche Additive zugesetzt werden, wie sie beispielsweise auf dem Lacksektor üblich sind. Beispiele für solche Additive sind Pigmente, beispielsweise transparente oder deckende farbgebende Pigmente wie Titandioxid oder Ruß und Effektpigmente, wie Metallschuppenpigmente und/oder Perlglanzpigmente.

Weitere Beispiele für Additive sind Füllstoffe, wie z.B. Talkum und Silikate; Weichmacher, Lichtschutzmittel, Stabilisatoren und Verlaufsmittel, wie Silikonöle. Die aus den erfindungsgemäßen Bindemitteln hergestellten Überzugsmittel können auf die gewünschte Applikationsviskosität durch entsprechende Regelung des Zusatzes von Lösemitteln und/oder Wasser und/oder Additiven eingestellt werden.

Die Aushärtung von aus den erfindungsgemäßen Überzugsmitteln erstellten Überzügen kann in einem weiten Temperaturbereich von beispielsweise 20°C bis 180°C erfolgen, bevorzugt in dem Bereich zwischen 80°C und 150°C.

Die aus den erfindungsgemäßen Bindemitteln hergestellten Überzugsmittel sind für Überzüge geeignet, die auf einer Vielzahl von Substraten haften, wie beispielsweise Holz, Textilien, Kunststoff, Glas, Keramik, Putz, Zement und insbesondere Metall.

Die Überzugsmittel können auch im Mehrschichtverfahren eingesetzt werden. So können sie beispielsweise auf übliche Grundierungen, Basislacke, Füller oder auf bereits vorhandene Decklacke aufgetragen werden.

Ein besonders bevorzugtes Anwendungsgebiet für die erfindungsgemäßen Bindemittel stellt die Bereitstellung von Überzugsmitteln für Lackierungen, die eine hohe Kochsicherheit bei einer gleichzeitig sehr guten Ablaufsicherheit besitzen sollen.

Die vorliegende Erfindung betrifft somit auch Verfahren zur Herstellung von Überzügen auf verschiedenen Substraten, bei denen auf das Substrat ein aus den erfindungsgemäßen Bindemitteln hergestelltes Überzugsmittel appliziert wird, worauf getrocknet und gehärtet wird. Die Erfindung betrifft auch die Verwendung der erfindungsgemäßen Bindemittelzusammensetzungen, insbesondere in Decklacken oder Klarlacken.

In jedem Fall erhält man mit den aus den erfindungsgemäßen Bindemitteln hergestellten Überzugsmitteln Filme mit sehr guter Chemikalienbeständigkeit, sehr guter Ablaufsicherheit, sehr hoher Kochsicherheit und gutem Decklackstand bei sehr hohem Verarbeitungsfestkörper.

Die Applikation der erfindungsgemäßen Überzugsmittel kann in üblicher Weise erfolgen, beispielsweise durch Tauchen, Spritzen, Streichen oder auf elektrostatischem Wege.

Die folgenden Beispiele dienen zur Erläuterung der Erfindung. Alle Teile (T) beziehen sich auf das Gewicht.

### Beispiel 1

### Herstellung eines Polyesteroligomeren

336,7 T Trimethylolpropan, 366,8 T Adipinsäure und 197 T Hexandiol werden mit 5 T unterphosphoriger Säure in einem mit Rührer, Abscheider, Thermometer und Rückflußkühler versehenen 2-Liter-Dreihalskolben bei 180°C bis 230°C in der Schmelze auf eine Säurezahl von 20 verestert.

Anschließend wird unter Vakuum bis zu einer Säurezahl unter 1,5 kondensiert.

Das so erhaltene Produkt hat einen Einbrennrückstand von 94,5 % (1h, 150°C), eine Viskosität von 3200 mPa.s (100 %ig), eine Hydroxylzahl von 460 und eine Farbzahl von 30 Hazen.

### Beispiel 2

### Herstellung eines Polyacrylatharzes

In einem 2-Liter-Dreihalskolben, der mit Tropftrichter, Rührer, Rückflußkühler und Thermometer versehen ist, werden 200 T Solvesso 100 (Gemisch aromatischer Kohlenwasserstoffe), 20 T Butylacetat 98/100 unter Rühren auf 150°C erhitzt. Anschließend werden über einen Zeitraum von 5 Stunden 25 T Butandiolmonoacrylat, 165 T Butylacrylat, 95 T Ethylhexylmethacrylat, 225 T Hydroxypropylmethacrylat und ein Gemisch aus 10 T Di-tertiär-butylperoxid und 30 T Tertiärbutylperoctoat zudosiert. Es wird 6 Stunden unter Rückfluß nachpolymerisiert. Das erhaltene Produkt wird mit 130 T Butylacetat 98/100 verdünnt und hat einen Einbrennrückstand (1h, 150°C) von 64,3 % eine Viskosität von 210 mPa.s und eine Farbzahl von 20 Hazen.

### Beispiel 3

### Herstellung eines Polyesteroligomeracrylates

In einem 4-Liter-Dreihalskolben, der mit Tropftrichter, Rührer, Rückflußkühler und Thermometer versehen ist, werden 100 T des Polyesteroligomeren aus Beispiel 1 und 100 T Solvesso 100 (Gemisch aromatischer Kohlenwasserstoffe), 20 T Butylacetat 98/100 unter Rühren auf 150°C erhitzt. Anschließend werden über einen Zeitraum von 5 Stunden 25 T Butandiolmonoacrylat, 165 T Butylacrylat, 95 T Ethylhexylmethacrylat, 225 T Hydroxypropylmethacrylat und ein Gemisch aus 10 T Di-tertiär-butylperoxid und 30 T Tertiärbutylperoctoat zudosiert. Es wird 6 Stunden unter Rückfluß nachpolymerisiert. Das erhaltene Produkt hat einen Einbrennrückstand (1h, 150°C) von 73,8 % eine Viskosität von 2850 mPa.s und eine Farbzahl von 40 Hazen.

### Beispiel 4

### Herstellung eines COOH-funktionellen Polyesters

1000 T des unter Beispiel 1 hergestellten Polyesteroligomeren werden mit 878 T Hexahydrophthalsäureanhydrid in einem 4-Liter-Dreihalskolben, der mit Rührer, Rückflußkühler und Thermometer versehen ist, zugemischt und bei 80°C bis auf eine konstante Säurezahl verestert.

Das carboxylfunktionelle Harz hat einen Einbrennrückstand von 83,6 % (1h, 150°C), eine Viskosität von 4450 mPa.s, eine Säurezahl von 320 mg KOH/g Festharz und eine Farbzahl von 50 Hazen.

### Herstellung von Lacken

### Beispiel 5

### Herstellung von Mehrschichtlackierungen

Zu 409 T der Harzlösung aus Beispiel 2 werden unter laufendem Rührer 21 T eines handelsüblichen Phthalats, 24 T eines Gemisches handelsüblicher Lichtschutzmittel (HALS- und Benztriazolderivat im Verhältnis 1 : 1), 23 T einer 1 %igen xylolischen Lösung handelsüblicher Silikonöle (Verlaufs- und Benetzungsmittel) und 180 Teile eines Lösemittelgemisches aus Butyldiglykolacetat, Ethoxypropylacetat, Butylglykolacetat und hochsiedenden aromatischen Kohlenwasserstoffen im Verhältnis 13: 10 : 12 : 65 zugegeben.

In 100 T dieser Lösung werden 30 T einer 82 %igen Lösung eines aliphatischen Isocyanuratpolyisocyanats in Xylol/Butylacetat (1 : 1) homogen eingerührt. Dieser Klarlack wurde wie nachstehend erläutert zur Herstellung einer Mehrschichtlackierung verwendet.

Mit in der Automobilserienlackierung verwendetem handelsüblichem kathodisch abscheidbarem Elektrotauchlack (KTL) (18 *µ*m) und handelsüblichem Füller (35 *µ*m) vorbeschichtete Karosseriebleche wurden mit handelsüblichem wasserverdünnbarem Metallicbasislack in einer Trockenschichtdicke von 15 *µ*m lackiert und 6 Minuten bei 80°C vorgetrocknet. Direkt anschließend wurde der vorstehend beschriebene Klarlack in einer Trockenschichtdicke von 35 *µ*m durch Spritzauftrag naß-in-naß appliziert und nach 5 Minuten Ablüften bei Raumtemperatur 20 Minuten bei 140°C (Objekttemperatur) eingebrannt.

### Beispiel 6

Es wird analog zu Beispiel 5 gearbeitet mit dem Unterschied, daß zusätzlich 0,3 T einer 10 %igen Lösung von Dibutylzinnlaurat in Xylol zur Klarlacklösung zugegeben werden.

### Beispiel 7

Es wird analog zu Beispiel 5 gearbeitet mit dem Unterschied, daß zusätzlich 8 T des sauren Polyesters aus Beispiel 4 zur Klarlacklösung zugegeben werden.

### Beurteilung der Klarlacke

| | | | |
|---|---|---|---|
| Klarlacke | 5 | 6 | 7 |
| Decklackstand | gut | gut | sehr gut |
| Ablaufneigung Läufer ab: | 33 µm Schichtdicke | 35 *µ*m Schichtdicke | 44 *µ*m Schichtdicke |
| Eigenfarbe des eingebrannten Filmes | farblos | sehr schwach gelb | farblos |
| Säurebeständigkeit (10 % H₂SO₄) | gut | gut | exzellent |
| Pendelhärte (Schwingungen) | 111 | 123 | 141 |

## Patentansprüche

1. Bindemittelzusammensetzung, enthaltend:
A) 20 bis 77 Gew.-% eines oder mehrerer Bindemittel auf der Basis einer oder mehrerer oligomerer oder polymerer Polyolverbindungen mit einer Hydroxylzahl von 80 bis 300 mg KOH/g, einer Säurezahl von 0 bis 30 mg KOH/g, einem Zahlenmittel des Molekulargewichts (Mn) von 500 bis 10000, und einer Glastemperatur von -20 bis +70°C;
B) 77 bis 20 Gew.-% eines oder mehrerer Vernetzer auf der Basis aliphatischer und/oder cycloaliphatischer Polyisocyanate;
C) 3 bis 20 Gew.-% eines oder mehrerer carboxylgruppenhaltiger Oligo- oder Polyester als Katalysatorharze mit einer Säurezahl von 210 bis 300 mg KOH/g, und einem Zahlenmittel des Molekulargewichts (Mn) von 420 bis 3000;
wobei die Summe der Komponenten A) bis C) jeweils 100 Gew.-% ergibt; und
ein oder mehrere organische Lösemittel und/oder Wasser.

2. Überzugsmittel, enthaltend die Bindemittelzusammensetzung nach Anspruch 1, sowie lackübliche Additive.

3. Bindemittelzusammensetzung und Überzugsmittel nach Anspruch 1 oder 2, **dadurch gekennzeichnet, daß** die Polyolverbindung der Komponente A) ein hydroxyfunktionelles Poly(meth)acrylat, ein hydroxyfunktioneller Polyester und/oder ein hydroxyfunktionelles Polyester-modifiziertes Poly(meth)acrylat ist.

4. Bindemittelzusammensetzung und Überzugsmittel nach Anspruch 1, 2 und 3, **dadurch gekennzeichnet, daß** die Polyisocyanate der Komponente B) in Form von Isocyanuraten, insbesondere des Trisisocyanurats von Hexamethylendiisocyanat vorliegen.

5. Bindemittelzusammensetzung und Überzugsmittel nach einem der vorhergehenden Ansprüche, **dadurch gekennzeichnet, daß** die Polyisocyanate der Komponente B) ganz oder teilweise verkappt sind.

6. Bindemittelzusammensetzung und Überzugsmittel nach einem der vorhergehenden Ansprüche, **dadurch gekennzeichnet, daß** sie organische Lösemittel enthalten und frei von Wasser sind.

7. Bindemittelzusammensetzung und Überzugsmittel nach einem der Ansprüche 1 bis 5, **dadurch gekennzeichnet, daß** sie Wasser und gegebenenfalls organische Lösemittel enthalten.

8. Verfahren zur Mehrschichtlackierung eines Substrats, bei dem auf ein Substrat, das vorbeschichtet sein kann, eine Decklackschicht oder eine Basislackschicht und darüber eine Klarlackschicht aufgetragen und eingebrannt werden, **dadurch gekennzeichnet, daß** als Decklackschicht, als Basislackschicht und/oder als Klarlackschicht ein Überzugsmittel nach einem der Ansprüche 2 bis 7 aufgetragen wird.

9. Verfahren nach Anspruch 8, **dadurch gekennzeichnet, daß** die Überzugsschicht aus den Überzugsmitteln nach einem der Ansprüche 2 bis 7 bei Temperaturen von 80 bis 150°C eingebrannt werden.

10. Verwendung der Überzugsmittel nach einem der Ansprüche 2 bis 7 als pigmenthaltige Decklacke oder als pigmentfreie oder transparente Pigmente und/oder Farbstoffe enthaltende Klarlacke.

## Claims

1. A binder vehicle composition containing:
A) 20 to 77 % by weight of one or more binder vehicles based on one or more oligomeric or polymeric polyol compounds with a hydroxyl number of 80 to 300 mg KOH/g, an acid number of 0 to 30 mg KOH/g, a number average molecular weight (Mn) of 500 to 10,000, and a glass transition temperature of -20 to +70°C;
B) 77 to 20 % by weight of one or more crosslinking agents based on aliphatic and/or cycloaliphatic polyisocyanates;
C) 3 to 20 % by weight of one or more oligo- or polyesters, which contain carboxyl groups, as catalyst resins with an acid number of 210 to 300 mg KOH/g and a number average molecular weight (Mn) of 420 to 3000;
wherein the sum of components A) to C) is 100 % by weight in each case; and
one or more organic solvents and/or water.

2. A coating medium containing the binder vehicle composition according to claim 1, as well as customary lacquer additives.

3. A binder vehicle composition and coating medium according to claims 1 or 2, **characterised in that** the polyol compound of component A) is a hydroxy-functional poly(meth)acrylate, a hydroxy-functional polyester and/or a hydroxy-functional polyester-modified poly(meth)acrylate.

4. A binder vehicle composition and a coating medium according to claims 1, 2 or 3, **characterised in that** the polyisocyanates of component B) are present in the form of isocyanurates, particularly as the triisocyanurate of hexamethylene diisocyanate.

5. A binder vehicle composition and a coating medium according to any one of the preceding claims, **characterised in that** the polyisocyanates of component B) are completely or partially capped.

6. A binder vehicle composition and a coating medium according to any one of the preceding claims, **characterised in that** they contain organic solvents and are free from water.

7. A binder vehicle composition and a coating medium according to any one of claims 1 to 5, **characterised in that** they contain water and optionally organic solvents.

8. A method for the multi-layer lacquer-coating of a substrate, wherein a covering lacquer coat or a base lacquer coat and over them a clear lacquer coat are applied to a substrate, which may be pre-coated, and are stoved, **characterised in that** a coating medium according to any one of claims 2 to 7 is applied as a covering lacquer coat, as a base lacquer coat and/or as a clear lacquer coat.

9. A method according to claim 8, **characterised in that** the coating layer comprising the coating media according to any one of claims 2 to 7 is stoved at temperatures of 80 to 150°C.

10. Use of the coating media according to any one of claims 2 to 7 as pigment-containing covering lacquers or as pigment-free clear lacquers or as transparent clear lacquers containing pigments and/or colorants.

## Revendications

1. Composition de liants comportant :
A) de 20 à 77 % en poids d'un ou plusieurs liants à base d'un ou plusieurs composés polyols oligomères ou polymères avec un indice d'hydroxyle de 80 à 300 mg de KOH/g, un indice d'acide de 0 à 30 mg de KOH/g, une moyenne en nombre du poids moléculaire (Mn) de 500 à 10 000, et une température vitreuse de -20 à +70°C ;
B) de 77 à 20 % en poids d'un ou plusieurs réticulants à base de polyisocyanates aliphatiques et/ou cycloaliphatiques ;
C) de 3 à 20 % en poids d'un ou plusieurs oligoesters ou polyesters contenant des groupes carboxyles comme résines de catalyseurs avec un indice d'acide de 210 à 300 mg de KOH/g, et une moyenne en nombre du poids moléculaire (Mn) de 420 à 3000 ;
où la somme des composants A) à C) donne chaque fois 100 % en poids ; et
un ou plusieurs solvants organiques et/ou de l'eau.

2. Agent de revêtement comportant la composition de liants selon la revendication 1, ainsi que des additifs habituels pour les laques.

3. Composition de liants et agent de revêtement selon la revendication 1 ou 2, **caractérisés en ce que** le composé polyol du composant A) est un poly(méth)acrylate à fonctions hydroxy, un polyester à fonctions hydroxy et/ou un poly(méth)acrylate modifié par un polyester à fonctions hydroxy.

4. Composition de liants et agent de revêtement selon la revendication 1, 2 et 3, **caractérisés en ce que** les polyisocyanates du composant B) se présentent sous forme d'isocyanurates, en particulier du trisisocyanurate d'hexaméthylènediisocyanate.

5. Composition de liants et agent de revêtement selon une des revendications précédentes, **caractérisés en ce que** les polyisocyanates du composant B) sont couronnés en totalité ou partiellement.

6. Composition de liants et agent de revêtement selon une des revendications précédentes, **caractérisés en ce qu'**ils comportent des solvants organiques et qu'ils sont dépourvus d'eau.

7. Composition de liants et agent de revêtement selon une des revendications 1 à 5, **caractérisés en ce qu'**ils comportent de l'eau et le cas échéant des solvants organiques.

8. Procédé pour un laquage multicouche d'un substrat, dans lequel on applique sur un substrat, qui peut être recouvert au préalable, une couche de laque de couverture ou une couche de laque de base et là-dessus une couche de laque claire, et on les cuit, **caractérisé en ce que** comme couche de laque de couverture, comme couche de laque de base et/ou comme couche de laque claire, on applique un agent de revêtement selon une des revendications 2 à 7.

9. Procédé selon la revendication 8, **caractérisé en ce que** la couche de revêtement à partir des agents de revêtement selon une des revendications 2 à 7 est cuite à des températures de 80 à 150°C.

10. Utilisation des agents de revêtement selon une des revendications 2 à 7 comme laques de couverture contenant des pigments ou comme laques claires dépourvues de pigments ou contenant des pigments et/ou des colorants transparents.
